# EUROPEAN PATENT SPECIFICATION

(11) **EP 2 950 105 B1**
(45) Date of publication and mention of the grant of the patent: **22.07.2020**
(21) Application number: 15169307.4
(22) Date of filing: 27.05.2015
(51) Int. Cl.: G01N 35/00, G01N 15/14, G01N 21/53, G01N 15/10

(54) **DEVICE FOR DETECTING PARTICLES IN A LIQUID AND METHOD FOR DETECTING PARTICLES IN A LIQUID**
VORRICHTUNG ZUM NACHWEIS VON PARTIKELN IN EINER FLÜSSIGKEIT UND VERFAHREN ZUM NACHWEIS VON PARTIKELN IN EINER FLÜSSIGKEIT
DISPOSITIF ET PROCÉDÉ DE DÉTECTION DE PARTICULES DANS UN LIQUIDE

(30) Priority: 30.05.2014 JP 2014113354
(43) Date of publication of application: 02.12.2015
(73) Proprietor: Azbil Corporation, Chiyoda-ku Tokyo 100-6419 (JP)
(72) Inventor: Obara, Daisuke, Tokyo, Tokyo 100-6419 (JP); Furuya, Masashi, Tokyo, Tokyo 100-6419 (JP)
(74) Representative: Lavoix

(56) References cited:
- EP-A1- 0 638 800
- EP-A1- 0 652 428
- EP-A1- 2 249 143
- WO-A1-95/09354
- JP-A- H09 113 440
- JP-A- S62 188 942
- US-A- 4 570 639
- US-A- 5 539 386
- US-A1- 2007 257 215

## Description

### FIELD OF TECHNOLOGY

The present disclosure relates to an analytical technique, relating to a device for detecting particles in a liquid and a method for detecting particles in a liquid.

### BACKGROUND

US 2007/257215 A1 describes a flow cytometry system having bubble detection capabilities and automated controls for mitigating the effects of bubbles in the interrogation zone.

WO 95/09354 A1 describes a particle sensor having an elliptical mirror with a cavity for collecting and analyzing particles.

EP 2 249 143 A1 discloses a fluorescence detection device and a fluorescence detection method of measuring fluorescence emitted from a measurement object by irradiation with a laser beam.

In a process for inspecting a liquid, the liquid may be inspected as to whether or not it includes particles, using a device for detecting particles in a liquid. See, for example, Japanese Patent Nos. 3263729, 3265361 and 3962306 (the "JP '729", "JP '361" and "JP '306", respectively). The device for detecting particles in a liquid, for example, illuminates, with an inspection beam, a flow cell through which a liquid is flowing, and then monitors as to whether or not light scattered from particles included in the liquid is detected. In some cases, monitoring may be performed as to whether or not fluorescence emitted by the particles is detected.

Here when, for example, the liquid is not supplied to the device for detecting particles in a liquid, or there is a malfunction in a pump, or the like, that feeds the liquid, the flow cell may become empty, rather than liquid flowing through the flow cell that is illuminated by the inspection beam. In relation to this, the JP '306 describes a method for identifying whether or not there is liquid within the cell, based on calculated intensities of transmitted light, scattered light, and reflected light from the cell, in order to prevent damage to the stirring device or pump. However, in the method described in the JP '306 it is necessary for the light to be incident into the cell from an oblique direction, and necessary to arrange a large number of photodetectors around the periphery of the cell, such as a forward-direction detector, a wide-angle scattered light detector group, a reflected light detector, and the like.

Given this, an aspect is to provide a device for detecting particles in a liquid and a method for detecting particles in a liquid wherein whether or not the flow cell is filled with a liquid can be evaluated easily.

### SUMMARY

The present invention provides a device for detecting particles in a liquid according to claim 1.

The present invention provides a method for detecting particles in a liquid according to claim 9.

The dependent claims set out particular embodiments of the invention.

The present invention enables provision of a device for detecting particles in a liquid and a method for detecting particles in a liquid wherein whether or not the flow cell is filled with a liquid can be evaluated easily.

### BRIEF DESCRIPTIONS OF THE DRAWINGS

FIG. 1 is a schematic diagram of a device for detecting particles in a liquid, according to an example according to the present invention.
FIG. 2 is a schematic diagram of a flow cell that is filled with a liquid that includes particles, according to an example according to the present invention.
FIG. 3 is a schematic graph illustrating intensities of light scattered by particles over time in an example according to the present invention.
FIG. 4 is a schematic diagram of a flow cell in which there is air, in an example according to the present invention.
FIG. 5 is a schematic graph illustrating the intensities of light scattered by the flow cell, in which there is air, over time, in an example according to the present invention.
FIG. 6 is a flowchart illustrating a method for detecting particles in a liquid according to an example according to the present invention.

### DETAILED DESCRIPTION

An example of the present disclosure will be described below. In the descriptions of the drawings below, identical or similar parts are expressed by identical or similar codes. Note that the diagrams are schematic. Consequently, specific measurements should be evaluated in light of the descriptions below. Furthermore, even within these drawings there may, of course, be portions having differing dimensional relationships and proportions.

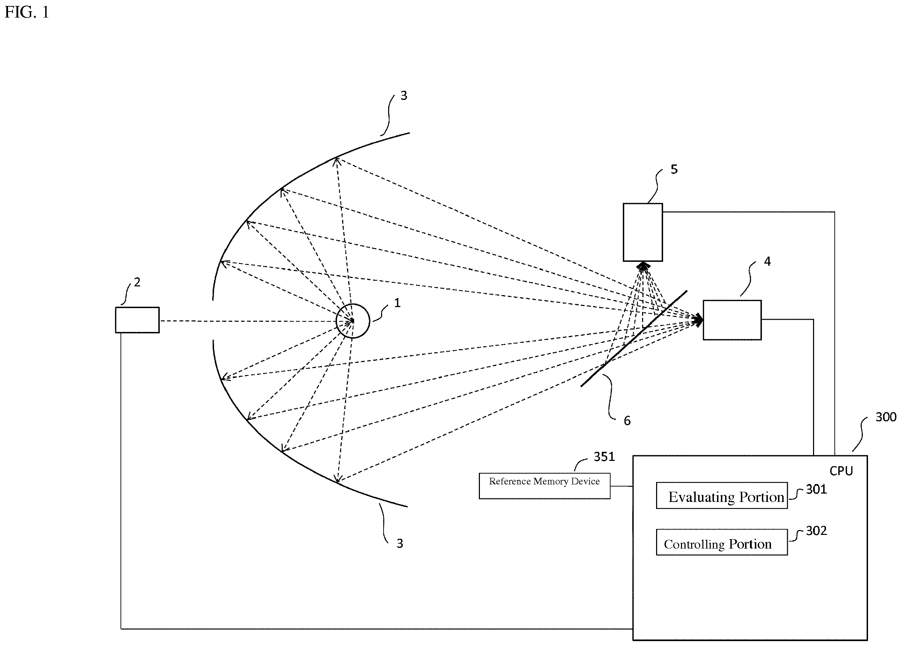

The device for detecting particles in a liquid according to an example according to the present invention, as illustrated in FIG. 1, comprises: a flow cell 1 in which a liquid flows; a light source 2 for illuminating the flow cell 1 with an inspection beam; a scattered light detector 5 for detecting scattered light produced by the region illuminated by the inspection beam; and an evaluating portion 301 for evaluating that a particle is included in the liquid if scattered light is detected for less than prescribed time, and for evaluating that the flow cell is not filled with a liquid if scattered light is detected over at least a prescribed time. The evaluating portion 301 is included in, for example, a central calculating processing unit (CPU) 300.

The device for detecting particles in a liquid may further comprise, for example, a fluorescence detector 4 for detecting fluorescence that is produced in the region illuminated by the inspection beam; a wavelength-selective reflecting mirror 6 for reflecting scattered light; and an elliptical mirror 3 for focusing the scattered light produced by the flow cell 1 onto the scattered light detector 5 and for focusing the fluorescence produced by the flow cell 1 onto the fluorescent detector 4.

The flow cell 1 is made from a clear material such as, for example, quartz. The flow cell 1 is, for example, a cylinder or a square tube. The liquid to be inspected as to whether or not it contains particles flows within the flow cell 1.

A light-emitting diode (LED) or a laser may be used as the light source 2 for emitting the inspection beam in the direction of the flow cell 1. The wavelength of the inspection beam is, for example, between 250 and 550 nm. The inspection beam may be visible light or may be ultraviolet light. If the inspection beam is visible light, then the wavelength of the inspection beam is in a range of, for example, between 400 and 550 nm, such as, for example, 405 nm. If the inspection beam is ultraviolet light, then the wavelength of the inspection beam is in a range of, for example, between 300 and 380 nm, for example, 340 nm. Note that the wavelength of the inspection beam is not limited to these.

The elliptical mirror 3 is, for example, placed between the light source 2 and the flow cell 1. Because of this, an opening is provided in the elliptical mirror 3 through which the inspection beam passes. The inspection beam is incident into the flow cell 1 perpendicularly, for example.

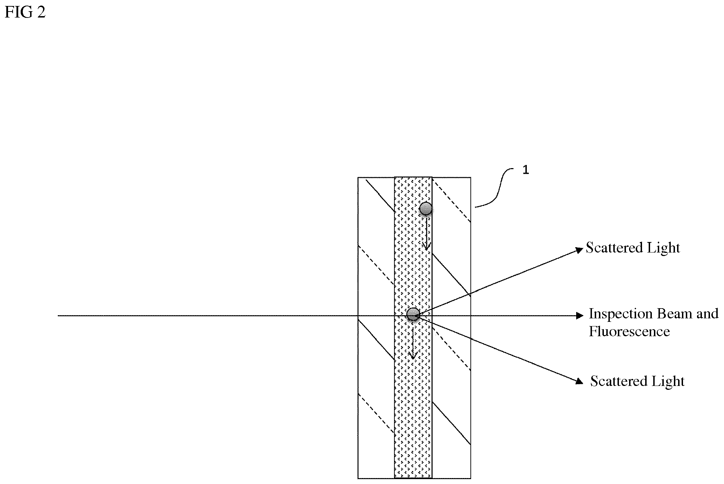

As illustrated in FIG. 2, if the liquid that flows in the flow cell 1 includes particles such as microorganism particles or non-microorganism particles, then scattered light will be produced at a particle that is illuminated by the inspection beam. Moreover, if the liquid that flows in the flow cell 1 includes a microorganism particle, such as a bacterium, then the nicotinamide adenine nucleotides and riboflavin, and the like, included in the microorganism that is illuminated by the inspection beam, as an excitation beam, will emit fluorescence.

The flow cell 1 is disposed so as to pass through a first focal point of the elliptical mirror 3. The fluorescent detector 4 is disposed at a second focal point of the elliptical mirror 3. As a result, the fluorescence that is produced by a microorganism particle within the liquid that flows in the flow cell 1 will be focused onto the position of the fluorescence detector 4 by the elliptical mirror 3, enabling the fluorescence to be detected efficiently. Moreover, the scattered light detector 5 is disposed in a position that is equivalent to the second focal point of the elliptical mirror 3, wherein the scattered light that is reflected by the elliptical mirror 3 and the wavelength-selective reflecting mirror 6 is focused. Because of this, scattered light produced by particles within the liquid that flows within the flow cell 1 can be detected efficiently by the scattered light detector 5.

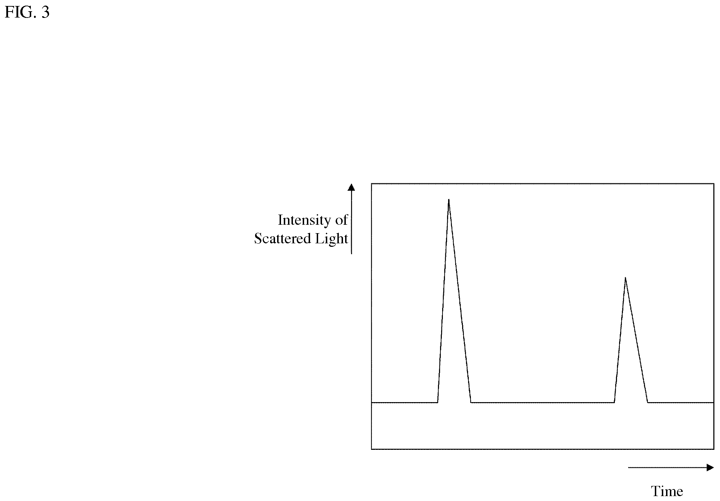

Because the particles flow, for example, perpendicularly to the direction of propagation of the inspection beam and because the size of the particles is small when compared to the diameter of the inspection beam, the length of time over which the scattered light, produced by a particle that is illuminated by the inspection beam, is detected is short. Because of this, when the intensity of the scattered light detected by the scattered light detector 5 is plotted versus time, as shown in FIG. 3, the scattered light is detected as a pulse. If the particle is thought of as a point, then the length of time over which the scattered light produced by a single particle is detected by the scattered light detector 5 will be near to the time wherein the diameter of the inspection beam is divided by the flow speed of the liquid that flows through the flow cell 1.

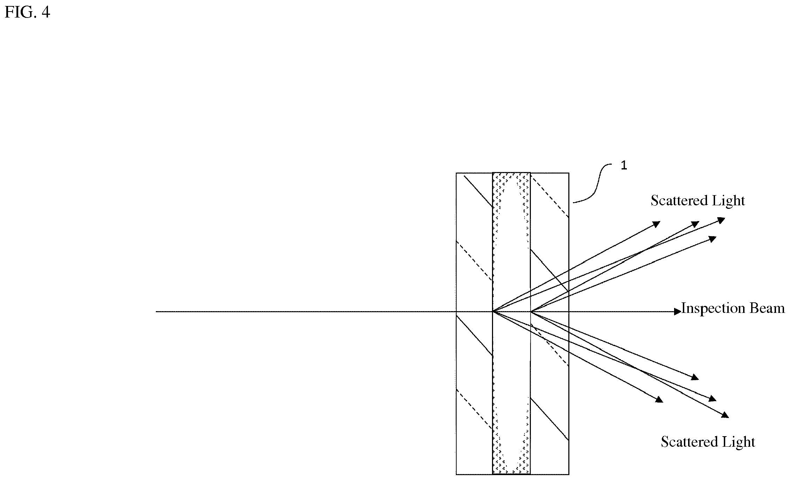

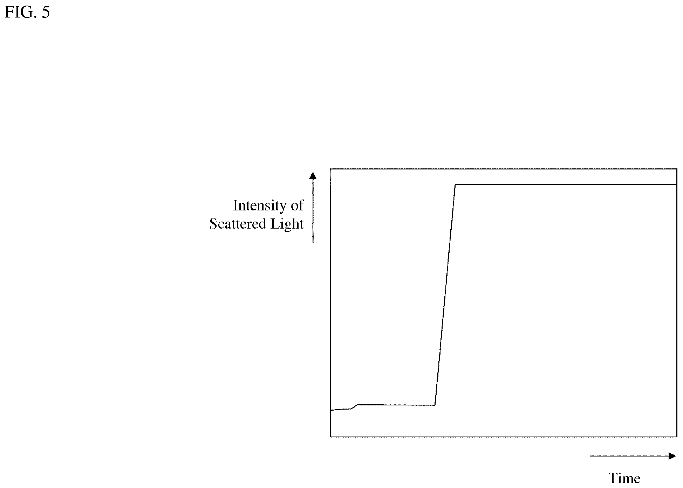

Here, as illustrated in FIG. 4, when there is no liquid flowing in the flow cell 1, scattered light will be produced by the difference in refractive indices between that of the flow cell 1 and the air within the flow cell 1. When no liquid is flowing, the volume of the air within the flow cell 1 will be large when compared to the volume of a particle. Because of this, when there is no liquid flowing in the flow cell 1, the intensity of scattered light will be stronger than the intensity of scattered light when there is a liquid that includes a particle flowing through the flow cell 1. Moreover, the scattered light will be detected continuously by the scattered light detector 5, as illustrated in FIG. 5, until the supply of liquid to the flow cell 1 is started or restarted. Because of this, the length of time over which the scattered light is detected by the scattered light detector 5 when no liquid is flowing in the flow cell 1 will be longer than the length of time that the scattered light is detected by the scattered light detector 5 when a liquid that contains particles is flowing within the flow cell 1.

The CPU 300 illustrated in FIG. 1 includes also a controlling portion 302. The controlling portion 302 controls the power supply for driving the light source 2, to control the intensity of the inspection beam that is produced by the light source 2. Moreover, the controlling portion 302 also controls, for example, the pump that supplies the liquid to the flow cell 1, to control the flow rate, and the like, of the liquid supplied to the flow cell 1.

When scattered light is detected over less than a prescribed time, the evaluating portion 301 evaluates that a particle is included within the liquid, and when scattered light is detected over more than the prescribed time, the evaluating portion 301 evaluates that the flow cell is not filled with liquid. The prescribed time can be set arbitrarily based on the particle size of the particle that is the subject of the inspection, and on the flow speed of the liquid flowing in the flow cell 1, determined in advance.

If, for example, scattered light of at least a prescribed strength is detected continuously for at least a prescribed time, the evaluating portion 301 evaluates that no liquid is flowing in the flow cell 1. The prescribed strength may be set arbitrarily based on, for example, the scattered light intensity produced by the particles that are subject to detection, and the intensity of the scattered light that is produced when there is no liquid flowing in the flow cell 1, determined in advance.

Moreover, the evaluating portion 301 evaluates whether or not at least the prescribed interval has elapsed since the scattered light of at least the prescribed strength was first detected. The prescribed interval may be set arbitrarily based on, for example, the time until the liquid fills the flow cell 1 after the pump is turned ON, determined in advance.

Furthermore, the evaluating portion 301 evaluates whether or not the intensity of the inspection beam produced from the light source 2 is of a strength such that the scattered light produced from the particle will be detectable, determined in advance.

A reference memory device 351 is connected to the CPU 300. The reference memory device 351 stores the prescribed time, prescribed strength, prescribed interval, and the intensity of the inspection beam such that the scattered light produced from a particle will be detectable, referenced by the evaluating portion 301.

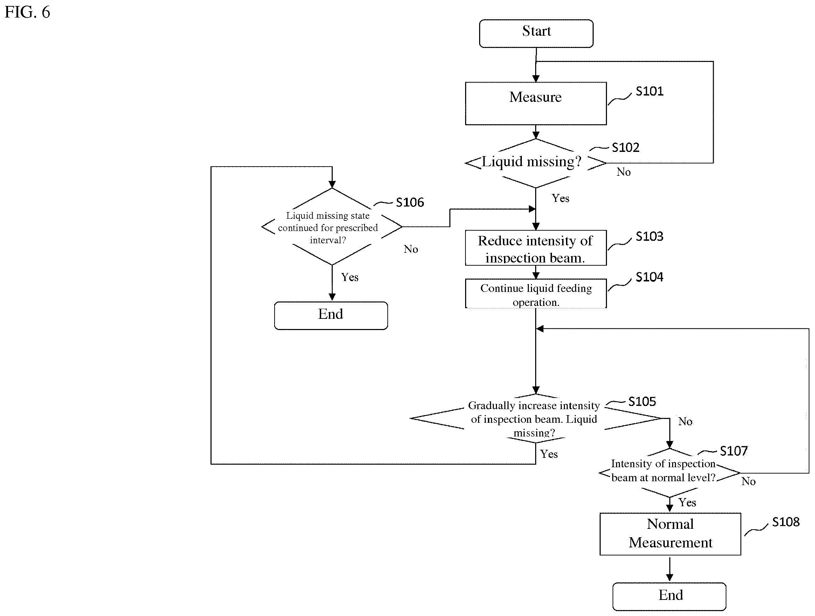

The flowchart illustrated in FIG. 6 will be used next to explain the method for detecting particles in a liquid using the device for detecting particles in a liquid according to the present example.

In Step S101, the controlling portion 302, illustrated in FIG. 1, controls the pump that is connected to the flow cell 1 to start the supply of liquid into the flow cell 1. Moreover, the controlling portion 302 causes an inspection beam of a strength such that scattered light from within the liquid is detectable, determined in advance, to be emitted from the light source 2 toward the flow cell 1.

In Step S102, the evaluating portion 301 reads out the prescribed reference value for the scattering light intensity and the prescribed reference value for the detection time for the scattered light, from the reference memory device 351. Furthermore, the evaluating portion 301, upon detection of scattered light by the scattered light detector 5, evaluates whether or not the intensity of the detected scattered light is at least the prescribed reference value. If the intensity of the detected scattered light is at least the prescribed reference value, then the evaluating portion 301 evaluates whether or not the detection of scattered light has continued for at least the prescribed time. If the intensity of the detected scattered light is less than the prescribed reference value, or if the detection of the scattered light did not continue for at least the prescribed time, then the flow cell 1 can be viewed as being filled with liquid, and thus processing returns to Step S102, and the detection of particles within the liquid is continued. If the detection of the scattered light continued for at least the prescribed time, then the evaluating portion 301 evaluates that the flow cell 1 is filled with liquid, and processing advances to Step S103.

In Step S103, the controlling portion 302 controls of the light source 2 to cause the light source 2 to reduce the intensity of the inspection beam to a point wherein, for example, the scattered light produced by a particle cannot be detected. Conversely, the intensity of the inspection beam produced by the light source 2 may be reduced to zero. In Step S104, the controlling portion 302 continues the operation for supplying liquid into the flow cell 1 using the pump. Thereafter, in Step S105, the controlling portion 302 controls the light source 2 to gradually increase the intensity of the inspection beam produced by the light source 2, to the original strength wherein the particles are detectable. During this interval, if the intensity of the detected scattered light is less than the prescribed reference value, or if the detection of the scattered light has not continued for at least the prescribed time, then processing advances to Step S107. Moreover, if detection of scattered light of at least the prescribed strength continues for at least the prescribed time, then the evaluating portion 301 evaluates that the flow cell 1 is not filled with liquid, and processing advances to Step S106.

In Step S106, the evaluating portion 301 evaluates whether or not at least a prescribed interval has elapsed since first detecting the battered light of at least the prescribed strength. If the prescribed interval has not elapsed, then processing returns to Step S103, and again the intensity of the inspection beam is reduced. Step S103 through Step S106 are repeated at prescribed intervals. If the prescribed interval has elapsed, then this is viewed as an inability to supply liquid to the flow cell 1, so the controlling portion 302 stops illuminating the inspection beam with the light source 2. Moreover, the operation for supplying liquid into the flow cell 1 using the pump is terminated.

In Step S105, if the intensity of the detected scattered light is less than the prescribed reference value, or if the detected scattered light has not continued for at least the prescribed time, then, in Step S107, the evaluating portion 301 evaluates whether or not the inspection beam intensity is a strength wherein scattered light produced from a particle would be detectable. If the intensity of the inspection beam is not a strength wherein scattered light produced by a particle would be detectable, processing returns to Step S105. If the intensity of the inspection beam is a strength wherein scattered light produced by a particle would be detectable, and the intensity of the detected scattered light is less than the prescribed reference value, or if the detection of the scattered light did not continue for at least the prescribed time, then processing advances to Step S108, and the device for detecting particles in a liquid maintains the inspection beam intensity so that particles will be detectable, and detects that there is a particle in the liquid that is flowing through the flow cell 1.

When the flow cell 1 is illuminated with the inspection beam from the light source 2, the energy of the inspection beam that is absorbed by the flow cell 1 is converted into heat. However, if liquid is flowing in the flow cell 1, the heat that is produced by the flow cell 1 is continuously removed by the liquid. In contrast, when the flow cell 1 is illuminated with the inspection beam from the light source 2 in a state wherein the flow cell 1 is not filled with a liquid, then the temperature of the flow cell 1 will increase, which could cause damage. In particular, when detecting also the fluorescence that is produced by particles, the intensity of the inspection beam, as an excitation beam, is increased, increasing the risk of damage through the increase in temperature of the flow cell 1.

Moreover, when the flow cell 1 is illuminated with the inspection beam from the light source 2 in a state wherein the flow cell 1 is not filled with liquid and wherein there is residue from, for example, minerals, organic materials, surface activating agents, or the like, in the flow cell 1, a problem may be produced wherein the residue is burned onto the flow cell 1.

In contrast, in the device for detecting particles in a liquid according to the example, it is possible to identify whether or not the flow cell 1 is filled with the liquid. Because of this, if the evaluation is that the flow cell 1 is not filled with a liquid, then, for example, the intensity of the inspection beam is reduced, making it possible to prevent damage, or the like, to the flow cell 1. Furthermore, the device for detecting particles in a liquid according to the example identifies whether or not the flow cell 1 is filled with a liquid depending on the time over which the scattered light is detected. Because of this, a photodetector that is placed according to only the scattering angle of the scattered light that occurs in particular when the flow cell 1 is not filled with liquid is not absolutely necessary.

Moreover, for the user of the device for detecting particles in a liquid, it may be burdensome to stop the device for detecting particles in a liquid each time it is discovered that there is no liquid within the flow cell 1. For example, there may be a case wherein there is a time lag between starting the pump and the liquid arriving within the flow cell 1, despite there not being any particular fault. Conversely, there may also be a case wherein all of the liquid that is subject to inspection has passed through the flow cell 1, so that the flow cell 1 has become empty.

Given this, the device for detecting particles in a liquid according to the example reduces the inspection beam intensity when there is an evaluation that the flow cell 1 is not filled with a liquid, preventing damage, or the like, to the flow cell 1, while the operation for supplying liquid into the flow cell 1 using the pump is continued over a prescribed interval. Because of this, even after there has been an evaluation that the flow cell 1 is not filled with liquid, if it is confirmed, during the prescribed interval over which the looped steps of Step S103 through Step S106 are executed, that the flow cell 1 is filled with liquid, then the detection of the particles included within the liquid can be started, making it possible to continue without any particular need for an operation by the user.

### Other Examples

While there are descriptions of examples as set forth above, the descriptions and drawings that form a portion of the disclosure are not to be understood to limit the present disclosure. A variety of alternate examples and operating technologies should be obvious to those skilled in the art. For example, a parabolic mirror may be used instead of the elliptical mirror 3 illustrated in FIG. 1. Moreover, in Step S106 in FIG. 6, the evaluating portion 301 may evaluate whether or not the number of times that scattered light of at least a prescribed strength has been detected continuously for at least a prescribed time exceeds a prescribed value. If less than the prescribed value, processing returns to Step S103, and the intensity of the inspection beam is again reduced. If at least the prescribed value, then this is viewed as an inability to supply liquid into the flow cell 1, and so the controlling portion 302 terminates illumination of the light source 2 with the inspection beam. Moreover, in Step S106, when scattered and fluorescence is detected for at least the prescribed time, the evaluating portion 301 evaluates that there is adhered contamination producing the fluorescence within the flow cell. In this way, the present disclosure should be understood to include a variety of examples, and the like, not set forth herein.

### List of Reference signs

- 1:: Flow Cell
- 2:: Light Source
- 3:: Elliptical Mirror
- 4:: Fluorescence Detector
- 5:: Scattered Light Detecting Device
- 6:: Wavelength-Selective Reflecting Mirror
- 301:: Evaluating Portion
- 302:: Controlling Portion
- 351:: Reference Memory Device

## Claims

1. A device for detecting particles in a liquid, comprising:
a flow cell (1) adapted to allow a liquid to flow through;
a light source (2) adapted to illuminate the flow cell (1) with an inspection beam;
a scattered light detector (5) adapted to detect scattered light that is produced in a region illuminated by the inspection beam;
an evaluating portion (301) adapted to evaluate that a particle is included in the liquid when the scattered light of at least a first prescribed strength is detected for less than a first prescribed time and to evaluate that the flow cell (1) is not filled with the liquid when the scattered light of at least a second prescribed strength is detected for more than a second prescribed time;
the device further comprising a fluorescent detector (4) for detecting fluorescence produced in the region illuminated by the inspection beam, and being **characterized in that**, when the scattered light and the fluorescence is detected for at least a third prescribed time, the evaluating portion (301) is adapted to evaluate that contamination is adhered to the flow cell (1).

2. The device for detecting particles in a liquid as set forth in Claim 1, wherein:
the light source (2) is adapted to reduce the intensity of the inspection beam when it has been evaluated that the flow cell (1) is not filled with the liquid, wherein, in particular, after the light source (2) has reduced the intensity of the inspection beam, the light source (2) is adapted to gradually increase the intensity of the inspection beam to the original strength wherein the particle is detectable.

3. The device for detecting particles in a liquid as set forth in Claim 2, wherein:
when scattered light of at least the second prescribed strength continues for at least the second prescribed time, the light source (2) is adapted to reduce the intensity of the inspection beam.

4. The device for detecting particles in a liquid as set forth in Claim 2, wherein:
when scattered light of at least the second prescribed strength is not detected continuously for at least the second prescribed time, the light source (2) is adapted to maintain the intensity of the inspection beam so that the particle is detectable.

5. The device for detecting particles in a liquid as set forth in Claim 3, wherein:
when the number of times that scattered light of at least the second prescribed strength continuing for at least the second prescribed time is detected is at least a prescribed value, the light source (2) is adapted to turn the inspection beam OFF, or when at least a prescribed interval has elapsed since detection of scattered light of at least the second prescribed strength, the light source (2) is adapted to turn the inspection beam OFF.

6. The device for detecting particles in a liquid as set forth in any one of Claim 1 through Claim 5, wherein:
the inspection beam is incident perpendicularly into the flow cell (1).

7. The device for detecting particles in a liquid as set forth in any one of Claim 1 through Claim 6, further comprising:
an elliptical mirror (3) for focusing the scattered light onto the scattered light detector, wherein, in particular, the flow cell (1) is adapted to pass through the first focal point of the elliptical mirror (3) and the scattered light detector (5) is disposed at the second focal point of the elliptical mirror (3).

8. The device for detecting particles in a liquid as set forth in any one of Claim 1 through Claim 7, wherein:
the flow cell (1) is made of quartz.

9. A method for detecting particles in a liquid including:
illuminating, with an inspection beam, a flow cell (1) adapted to allow a liquid to flow through;
detecting scattered light produced in a region illuminated by the inspection beam;
evaluating that a particle is included in the liquid when the scattered light of at least a first prescribed strength is detected for less than a first prescribed time and evaluating that the flow cell (1) is not filled with the liquid when the scattered light of at least a second prescribed strength is detected for at least a second prescribed time,
the method further comprising detecting fluorescence produced in the region illuminated by the inspection beam, wherein, and being **characterized in that**, when the scattered light and the fluorescence is detected for at least a third prescribed time, the evaluating portion (301) is adapted to evaluate that contamination is adhered to the flow cell (1).

10. The method for detecting particles in a liquid as set forth in Claim 9, including:
reducing the intensity of the inspection beam when it has been evaluated that the flow cell (1) is not filled with the liquid, wherein the method in particular includes increasing the intensity of the inspection beam to the original strength wherein the particle is detectable, after the intensity of the inspection beam has been reduced.

11. The method for detecting particles in a liquid as set forth in Claim 10, including:
reducing the intensity of the inspection beam when scattered light of at least the second prescribed strength has been detected continuously for at least the second prescribed time.

12. The method for detecting particles in a liquid as set forth in Claim 10, including:
maintaining the intensity of the inspection beam so that the particle is detectable when scattered light of at least the second prescribed strength has not been detected continuously for at least the second prescribed time.

13. The method for detecting particles in a liquid as set forth in Claim 11, including:
turning OFF the inspection beam when the number of times that scattered light of at least a prescribed strength is detected continuously for at least the prescribed time is at least a prescribed value, or turning the inspection beam OFF when at least a prescribed interval has elapsed after detecting the scattered light of at least a prescribed strength.

14. A method for detecting particles in a liquid as set forth in any one of Claim 9 through Claim 13, including:
the inspection beam being incident perpendicularly to the flow cell (1).

15. The method for detecting particles in a liquid as set forth in any one of Claim 9 through Claim 14, including:
focusing the scattered light onto a scattered light detector (5) using an elliptical mirror (3), wherein, in particular, the flow cell (1) passing through the first focal point of the elliptical mirror (3) and the scattered light detector (5) being disposed at the second focal point of the elliptical mirror (3).

16. The method for detecting particles in a liquid as set forth in any one of Claim 9 through Claim 15, including:
detecting fluorescence produced in the region illuminated by the inspection beam, wherein, in particular, the method includes:
evaluating that contamination is adhered to the flow cell (1) when the scattered light and the fluorescence is detected for at least a prescribed time.

## Patentansprüche

1. Vorrichtung zum Detektieren von Teilchen in einer Flüssigkeit, umfassend:
eine Durchflusszelle (1), die ausgelegt ist, um eine Flüssigkeit dadurch durchfließen zu lassen;
eine Lichtquelle (2), die zum Beleuchten der Durchflusszelle (1) mit einem Prüfstrahl ausgelegt ist;
einen Streulichtdetektor (5), der zum Detektieren von Streulicht ausgelegt ist, das in einer Region erzeugt wird, die vom Prüfstrahl beleuchtet wird;
einen Beurteilungsabschnitt (301), der so ausgelegt ist, dass er beurteilt, dass ein Teilchen in der Flüssigkeit enthalten ist, wenn das Streulicht von mindestens einer ersten vorgegebenen Stärke für weniger als eine erste vorgegebene Zeit detektiert wird, und beurteilt, dass die Durchflusszelle (1) nicht mit Flüssigkeit gefüllt ist, wenn das Streulicht von mindestens einer zweiten vorgegebenen Stärke für mehr als eine zweite vorgegebene Zeit detektiert wird;
wobei die Vorrichtung ferner einen Fluoreszenz-Detektor (4) zum Detektieren von Fluoreszenz umfasst, die in der Region erzeugt wird, die vom Prüfstrahl beleuchtet wird, und **dadurch gekennzeichnet ist, dass**
der Beurteilungsabschnitt (301) so ausgelegt ist, dass er bei Detektion des Streulichts und der Fluoreszenz für mindestens eine dritte vorgegebene Zeit beurteilt, dass Verunreinigung an der Durchflusszelle (1) haftet.

2. Vorrichtung zum Detektieren von Teilchen in einer Flüssigkeit nach Anspruch 1, wobei:
die Lichtquelle (2) so ausgelegt ist, dass sie die Intensität des Prüfstrahls reduziert, wenn sie beurteilt hat, dass die Durchflusszelle (1) nicht mit der Flüssigkeit gefüllt ist, wobei die Lichtquelle (2) insbesondere so ausgelegt ist, dass sie nach dem Reduzieren der Intensität des Prüfstrahls durch die Lichtquelle (2) die Intensität des Prüfstrahls schrittweise auf die ursprüngliche Stärke erhöht, bei der das Teilchen detektierbar ist.

3. Vorrichtung zum Detektieren von Teilchen in einer Flüssigkeit nach Anspruch 2, wobei:
die Lichtquelle (2) so ausgelegt ist, dass sie die Intensität des Prüfstrahls reduziert, wenn Streulicht von mindestens der zweiten vorgegebenen Stärke für mindestens die zweite vorgegebene Zeit andauert.

4. Vorrichtung zum Detektieren von Teilchen in einer Flüssigkeit nach Anspruch 2, wobei:
die Lichtquelle (2) so ausgelegt ist, dass sie die Intensität des Prüfstrahls aufrechterhält, so dass das Teilchen detektierbar ist, wenn Streulicht von mindestens der zweiten vorgegebenen Stärke nicht für mindestens die zweite vorgegebene Zeit kontinuierlich detektiert wird.

5. Vorrichtung zum Detektieren von Teilchen in einer Flüssigkeit nach Anspruch 3, wobei:
die Lichtquelle (2) so ausgelegt ist, dass sie den Prüfstrahl auf AUS schaltet, wenn die Anzahl von Malen, die Streulicht von mindestens der zweiten vorgegebenen Stärke für mindestens die zweite vorgegebene Zeit kontinuierlich detektiert wird, mindestens einen vorgegebenen Wert beträgt, oder die Lichtquelle (2) so ausgelegt ist, dass sie den Prüfstrahl auf AUS schaltet, wenn mindestens ein vorgegebenes Intervall seit der Detektion von Streulicht von mindestens der zweiten vorgegebenen Stärke verstrichen ist.

6. Vorrichtung zum Detektieren von Teilchen in einer Flüssigkeit nach einem der Ansprüche 1 bis 5, wobei:
der Prüfstrahl senkrecht in die Durchflusszelle (1) einfällt.

7. Vorrichtung zum Detektieren von Teilchen in einer Flüssigkeit nach einem der Ansprüche 1 bis 6, ferner umfassend:
einen elliptischen Spiegel (3) zum Fokussieren des Streulichts auf den Streulicht-Detektor, wobei insbesondere die Durchflusszelle (1) so ausgelegt ist, dass sie durch den ersten Brennpunkt des elliptischen Spiegels (3) durchtritt, und der Streulicht-Detektor (5) am zweiten Brennpunkt des elliptischen Spiegels (3) angeordnet ist.

8. Vorrichtung zum Detektieren von Teilchen in einer Flüssigkeit nach einem der Ansprüche 1 bis 7, wobei:
die Durchflusszelle (1) aus Quarz hergestellt ist.

9. Verfahren zur Detektion von Teilchen in einer Flüssigkeit, umfassend:
Beleuchten einer Durchflusszelle (1), die ausgelegt, um eine Flüssigkeit dadurch durchfließen zu lassen, mit einem Prüfstrahl;
Detektieren von Streulicht, das in einer Region erzeugt wird, die vom Prüfstrahl beleuchtet wird;
Beurteilen, dass ein Teilchen in der Flüssigkeit enthalten ist, wenn das Streulicht von mindestens einer ersten vorgegebenen Stärke für weniger als eine erste vorgegebene Zeit detektiert wird, und Beurteilen, dass die Durchflusszelle (1) nicht mit Flüssigkeit gefüllt ist, wenn das Streulicht von mindestens einer zweiten vorgegebenen Stärke für mindestens eine zweite vorgegebene Zeit detektiert wird,
wobei das Verfahren ferner ein Detektieren von Fluoreszenz umfasst, die in der Region erzeugt wird, die vom Prüfstrahl beleuchtet wird, und **dadurch gekennzeichnet ist, dass**
der Beurteilungsabschnitt (301) so ausgelegt ist, dass er beurteilt, dass Verunreinigung an der Durchflusszelle (1) haftet, wenn das Streulicht und die Fluoreszenz für mindestens eine dritte vorgegebene Zeit detektiert werden.

10. Verfahren zur Detektion von Teilchen in einer Flüssigkeit nach Anspruch 9, umfassend:
Reduzieren der Intensität des Prüfstrahls, wenn beurteilt wird, dass die Durchflusszelle (1) nicht mit der Flüssigkeit gefüllt ist, wobei das Verfahren insbesondere ein Erhöhen der Intensität des Prüfstrahls auf die ursprüngliche Stärke umfasst, bei der das Teilchen detektierbar ist, nachdem die Intensität des Prüfstrahls reduziert wurde.

11. Verfahren zur Detektion von Teilchen in einer Flüssigkeit nach Anspruch 10, umfassend:
Reduzieren der Intensität des Prüfstrahls, wenn Streulicht von mindestens der zweiten vorgegebenen Stärke für mindestens die zweite vorgegebene Zeit kontinuierlich detektiert wurde.

12. Verfahren zur Detektion von Teilchen in einer Flüssigkeit nach Anspruch 10, umfassend:
Aufrechterhalten der Intensität des Prüfstrahls, so dass das Teilchen detektierbar ist, wenn Streulicht von mindestens der zweiten vorgegebenen Stärke nicht für mindestens die zweite vorgegebene Zeit kontinuierlich detektiert wurde.

13. Verfahren zur Detektion von Teilchen in einer Flüssigkeit nach Anspruch 11, umfassend:
Schalten des Prüfstrahls auf AUS, wenn die Anzahl von Malen, die Streulicht von mindestens einer vorgegebenen Stärke für mindestens die zweite vorgegebene Zeit kontinuierlich detektiert wird, mindestens einen vorgegebenen Wert beträgt, oder Schalten des Prüfstrahls auf AUS, wenn mindestens ein vorgegebenes Intervall nach dem Detektieren des Streulichts von mindestens einer vorgegebenen Stärke verstrichen ist.

14. Verfahren zur Detektion von Teilchen in einer Flüssigkeit nach einem der Ansprüche 9 bis 13, umfassend:
der Prüfstrahl senkrecht in die Durchflusszelle (1) einfällt.

15. Verfahren zur Detektion von Teilchen in einer Flüssigkeit nach einem der Ansprüche 9 bis 14, umfassend:
Fokussieren des Streulichts auf einen Streulicht-Detektor (5) unter Verwendung eines elliptischen Spiegels (3), wobei insbesondere die Durchflusszelle (1) so ausgelegt ist, dass sie durch den ersten Brennpunkt des elliptischen Spiegels (3) durchtritt, und der Streulicht-Detektor (5) am zweiten Brennpunkt des elliptischen Spiegels (3) angeordnet ist.

16. Verfahren zur Detektion von Teilchen in einer Flüssigkeit nach einem der Ansprüche 9 bis 15, umfassend:
Detektieren von Fluoreszenz, die in der Region erzeugt wird, die vom Prüfstrahl beleuchtet wird, wobei das Verfahren insbesondere umfasst:
Beurteilen, dass Verunreinigung an der Durchflusszelle (1) haftet, wenn das Streulicht und die Fluoreszenz für mindestens eine vorgegebene Zeit detektiert werden.

## Revendications

1. Dispositif de détection de particules dans un liquide, comprenant :
une cellule de débit (1) adaptée pour permettre à un liquide de circuler à l'intérieur ;
une source de lumière (2) adaptée pour éclairer la cellule de débit (1) avec un faisceau d'inspection ;
un détecteur de lumière diffusée (5) adapté pour détecter la lumière diffusée qui est produite dans une zone éclairée par le faisceau d'inspection ;
une partie d'évaluation (301) adaptée pour évaluer qu'une particule se trouve dans le liquide lorsque la lumière diffusée d'au moins une première intensité prescrite est détectée pendant une durée inférieure à une durée prescrite, et pour évaluer que la cellule de débit (1) n'est pas remplie avec le liquide lorsque la lumière diffusée d'au moins une seconde intensité prescrite est détectée pendant une durée supérieure à une seconde durée prescrite,
le dispositif comprenant en outre un détecteur de fluorescence (4) destiné à détecter la fluorescence produite dans la zone éclairée par le faisceau d'inspection, et étant **caractérisé en ce que**, lorsque la lumière diffusée et la fluorescence sont détectées pendant au moins une troisième durée prescrite, la partie d'évaluation (301) est adaptée pour évaluer qu'une contamination est collée sur la cellule de débit (1).

2. Dispositif de détection de particules dans un liquide selon la revendication 1, dans lequel :
la source de lumière (2) est adaptée pour réduire l'intensité du faisceau d'inspection lorsqu'il a été évalué que la cellule de débit (1) n'était pas remplie avec le liquide, dans lequel, en particulier, une fois que la source de lumière (2) a réduit l'intensité du faisceau d'inspection, la source de lumière (2) est adaptée pour augmenter progressivement l'intensité du faisceau d'inspection jusqu'à l'intensité d'origine avec laquelle la particule est détectable.

3. Dispositif de détection de particules dans un liquide selon la revendication 2, dans lequel :
lorsque la lumière diffusée d'au moins la seconde intensité prescrite se poursuit pendant au moins la seconde durée prescrite, la source de lumière (2) est adaptée pour réduire l'intensité du faisceau d'inspection.

4. Dispositif de détection de particules dans un liquide selon la revendication 2, dans lequel :
lorsque la lumière diffusée d'au moins la seconde intensité prescrite n'est pas détectée en continu pendant au moins la seconde durée prescrite, la source de lumière (2) est adaptée pour maintenir l'intensité du faisceau d'inspection de sorte que la particule soit détectable.

5. Dispositif de détection de particules dans un liquide selon la revendication 3, dans lequel :
lorsque le nombre de fois où la lumière diffusée d'au moins la seconde intensité prescrite qui se poursuit pendant au moins la seconde durée prescrite est détectée est au moins une valeur prescrite, la source de lumière (2) est adaptée pour désactiver le faisceau d'inspection, ou, lorsqu'au moins un intervalle prescrit s'est écoulé depuis la détection de la lumière diffusée d'au moins la seconde intensité prescrite, la source de lumière (2) est adaptée pour désactiver le faisceau d'inspection.

6. Dispositif de détection de particules dans un liquide selon l'une quelconque des revendications 1 à 5, dans lequel :
le faisceau d'inspection est incident perpendiculairement à la cellule de débit (1).

7. Dispositif de détection de particules dans un liquide selon l'une quelconque des revendications 1 à 6, comprenant en outre :
un miroir elliptique (3) destiné à concentrer la lumière diffusée vers le détecteur de lumière diffusée, dans lequel, en particulier, la cellule de débit (1) est adaptée pour passer par le premier point focal du miroir elliptique (3) et le détecteur de lumière diffusée (5) est disposé au niveau du second point focal du miroir elliptique (3).

8. Dispositif de détection de particules dans un liquide selon l'une quelconque des revendications 1 à 7, dans lequel :
la cellule de débit (1) est composée de quartz.

9. Procédé de détection de particules dans un liquide comprenant :
l'éclairage, avec un faisceau d'inspection, d'une cellule de débit (1) adaptée pour permettre à un liquide de circuler à l'intérieur ;
la détection de la lumière diffusée produite dans une zone éclairée par le faisceau d'inspection ;
l'évaluation du fait qu'une particule se trouve dans le liquide lorsque la lumière diffusée d'au moins une première intensité prescrite est détectée pendant une durée inférieure à une première durée prescrite, et l'évaluation du fait que la cellule de débit (1) ne soit pas remplie avec le liquide lorsque la lumière diffusée d'au moins une seconde intensité prescrite est détectée pendant au moins une seconde durée prescrite,
le procédé comprenant en outre la détection de la fluorescence produite dans la zone éclairée par le faisceau d'inspection, et étant **caractérisé en ce que**, lorsque la lumière diffusée et la fluorescence sont détectées pendant au moins une troisième durée prescrite, la partie d'évaluation (301) est adaptée pour évaluer qu'une contamination est collée sur la cellule de débit (1).

10. Procédé de détection de particules dans un liquide selon la revendication 9, comprenant :
la réduction de l'intensité du faisceau d'inspection lorsqu'il a été évalué que la cellule de débit (1) n'était pas remplie avec le liquide, dans lequel le procédé comprend en particulier l'augmentation de l'intensité du faisceau d'inspection jusqu'à l'intensité d'origine avec laquelle la particule est détectable, une fois que l'intensité du faisceau d'inspection a été réduite.

11. Procédé de détection de particules dans un liquide selon la revendication 10, comprenant :
la réduction de l'intensité du faisceau d'inspection lorsque la lumière diffusée d'au moins la seconde intensité prescrite a été détectée en continu pendant au moins la seconde durée prescrite.

12. Procédé de détection de particules dans un liquide selon la revendication 10, comprenant :
le maintien de l'intensité du faisceau d'inspection de sorte que la particule soit détectable lorsque la lumière diffusée d'au moins la seconde intensité prescrite n'a pas été détectée en continu pendant au moins la seconde durée prescrite.

13. Procédé de détection de particules dans un liquide selon la revendication 11, comprenant :
la désactivation du faisceau d'inspection lorsque le nombre de fois où la lumière diffusée d'au moins une intensité prescrite est détectée en continu pendant au moins la durée prescrite est au moins une valeur prescrite, ou la désactivation du faisceau d'inspection lorsqu'au moins un intervalle prescrit s'est écoulé après avoir détecté la lumière diffusée d'au moins une intensité prescrite.

14. Procédé de détection de particules dans un liquide selon l'une quelconque des revendications 9 à 13, comprenant :
le faisceau d'inspection qui est incident perpendiculairement à la cellule de débit (1).

15. Procédé de détection de particules dans un liquide selon l'une quelconque des revendications 9 à 14, comprenant :
la concentration de la lumière diffusée vers un détecteur de lumière diffusée (5) à l'aide d'un miroir elliptique (3), dans lequel, en particulier, la cellule de débit (1) passe par le premier point focal du miroir elliptique (3) et le détecteur de lumière diffusée (5) est disposé au niveau du second point focal du miroir elliptique (3).

16. Procédé de détection de particules dans un liquide selon l'une quelconque des revendications 9 à 15, comprenant :
la détection de la fluorescence produite dans la zone éclairée par le faisceau d'inspection, dans lequel, en particulier, le procédé comprend :
l'évaluation du fait qu'une contamination soit collée sur la cellule de débit (1) lorsque la lumière diffusée et la fluorescence sont détectées pendant au moins une durée prescrite.
